# EUROPEAN PATENT APPLICATION

(11) **EP 1 760 717 A2**
(43) Date of publication of application: **07.03.2007**
(21) Application number: 06117678.0
(22) Date of filing: 21.07.2006
(51) Int. Cl.: G11B 20/18, G06F 3/06

(54) **Recording data to an optical disk**

(30) Priority: 05.09.2005 KR 20050082279
(71) Applicant: Samsung Electronics Co., Ltd, Suwon-si, Gyeonggi-do 442-742 (KR)
(72) Inventor: Ju, Young Im, Seoul (KR); Lee, Yoon Woo, Suwon-Si Gyeonggi-Do (KR)
(74) Representative: Walaski, Jan Filip

(57) **Abstract**

A recording apparatus for and a method of handling an error occurring when recording information on an optical disc. An existing ECC block on the optical disc is read in response to a first record command provided by a superior apparatus. If an error occurs in the reading of the existing ECC block, an error occurrence report is provided to the superior apparatus which formulates a second record command based on the error occurrence report and the information is recorded in another ECC block on the optical disc according to the second record command.

## Description

The present invention relates to data recording, particularly to an optical recording apparatus and an information recording method using the same, and more particularly to an optical recording apparatus for handling an error which occurs when recording information/data on an optical disc, and an information recording method using the same.

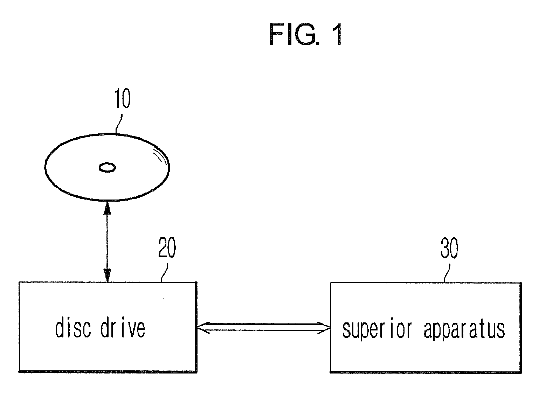

Figure 1 is a block diagram showing a configuration of a general optical recorder. As shown in Figure 1, the general optical recorder includes a disc drive 20 and a superior apparatus 30, which records information/data on an optical disc 10. The superior apparatus 30 transmits a record command for recording the information/data on the optical disc 10 to the disc drive 20. The disc drive 20 records the information/data on the optical disc 10 according to the record command.

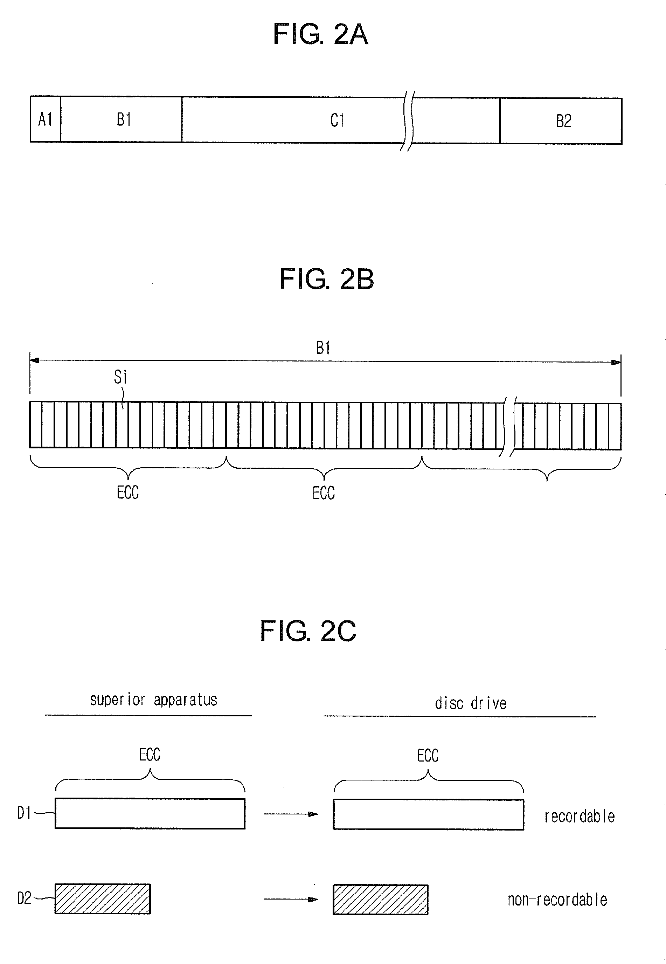

Figure 2A is a view showing a recording format structure of an optical disc. Figure 2B is a view showing a recording format which is partitioned into ECC (error correction code) blocks. Figure 2C is a view illustrating respective recording operations according to record commands.

As shown in Figure 2A, the recording format structure of an optical disc includes a disc information area (A1) for containing specification information of the optical disc, and the like, header information areas (B1, B2) for containing information relating to recording of content, and a content information area (C1) for recording content information. For example, as shown in Figure 2B, the information area (B1) among the header information areas (B1, B2) includes a plurality of ECC (error check code) blocks, wherein one ECC block has 16 sectors (Si).

In a case where the optical disc 10 is a recording medium such as a DVD-RAM or a DVD-RW, record commands transmitted from the superior apparatus 30 to the disc drive 20 include ECC block-unit data (D1) or sector-unit data (D2) as shown in Figure 2C. Since the disc drive 20 records only the ECC block-unit data (D1) on the optical disc 10, the disc drive 20 cannot immediately record the sector-unit data (D2) on the optical disc 10.

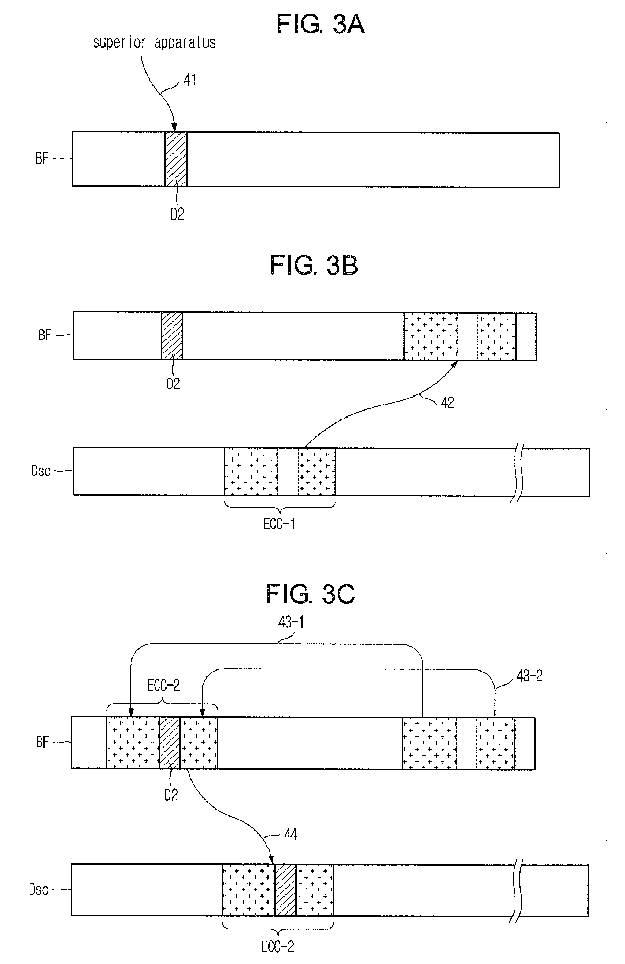

Figures 3A to 3C are views illustrating conventional recording procedures. In order to record the sector-unit data (D2), the disc drive 20 forms the ECC blocks, and then records the data. Referring to Figures 3A to 3C, the above-described procedures will be explained in more detail. As shown in Figure 3A, the disc drive 20 stores the sector-unit record command (D2) in a buffer area (BF), wherein the sector-unit record command (D2) is transmitted from the superior apparatus 30 (41). The record command (D2) includes a start address for the recording data, and length information for the recording data. Using the start address and length information for the recording data, the disc drive 20 reads an ECC block (ECC-1) from a recording area (Dsc) of the optical disc 10, and stores the ECC block (ECC-1) in the buffer area (BF), wherein the ECC block (ECC-1) corresponds to the start address and the length information (42). The disc drive 20 copies the remaining data except for data corresponding to the sector-unit record command (D2) among the ECC block (ECC-1) stored in the buffer area (BF), and forms a new ECC block (ECC-2) (43-1, 43-2). The disc drive 20 records the new ECC block (ECC-2) in the recording area (Dsc) of the optical disc 10 (44), wherein the new ECC block (ECC-2) contains the record command (D2).

In a case where the optical disc 10 is scratched or is contaminated, an error occurs when the read operation as shown in Figure 3B is performed, and the disc drive 20 reports the error to the superior apparatus 30. When the error occurs, since additional recording is prevented in order to preserve data previously recorded on the optical disc 10, the disc drive 20 continuously reports the error to the superior apparatus 30.

Therefore, an aspect of the invention is to provide an optical recording apparatus, wherein, by recording an ECC block-unit record command provided through a superior apparatus on an optical disc, an error which occurs when recording information/data on the optical disc may be corrected. Another aspect of the invention provides a method of recording information/data on the optical disc after a failure of a first attempt to record the information/data has been reported to the superior apparatus.

The above and/or other aspects of the invention are achieved by providing an optical recording apparatus for recording digital data on an optical disc, the optical recording apparatus comprising: a disc drive recording digital data on the optical disc according to record commands; and a superior apparatus generating the record commands and transmitting the record commands to the disc drive, wherein, if an error occurs where the disc drive can not record the digital data on the optical disc according to a first record command, the disc drive sends an error occurrence report to the superior apparatus, and records the digital data on the optical disc according to a second record command from the superior apparatus based on the error occurrence report; and if the superior apparatus receives the error occurrence report from the disc drive, the superior apparatus adds additional data to the first record command to form the second record command, and transmits the second record command to the disc drive.

In accordance with another aspect of the present invention, a method of recording digital data on an optical disc by a disc drive, according to a record commands received from a superior apparatus, comprises: loading the optical disc in the disc drive; transmitting a first record command to the disc drive from the superior apparatus; determining whether the disc drive can record the digital data on the optical disc according to the first record command; sending an error occurrence report to the superior apparatus from the disc drive if an error occurs in which the disc drive can not record the digital data on the optical disc; forming a second record command in response to the error occurrence report; transmitting the second record command to the disc drive; and recording the digital data on the optical disc according to the second record command.

Embodiments of the invention will now be described by way of example with reference to the accompanying drawings, in which:
Figure 1 is a block diagram showing the configuration of a general optical recorder;
Figure 2A is a view showing a recording format structure of an optical disc;
Figure 2B is a view showing a recording format which is partitioned into ECC (error correction code) blocks;
Figure 2C is a view illustrating respective recording operations according to record commands;
Figures 3A to 3C are views illustrating conventional recording procedures;
Figure 4 is a block diagram showing the configuration of an optical recording apparatus according to an embodiment of the present invention;
Figures 5A to 5E are views illustrating recording procedures according to the embodiment shown in Figure 4; and
Figures 6A and 6B are flowcharts illustrating a method of recording information according to an embodiment of the present invention.

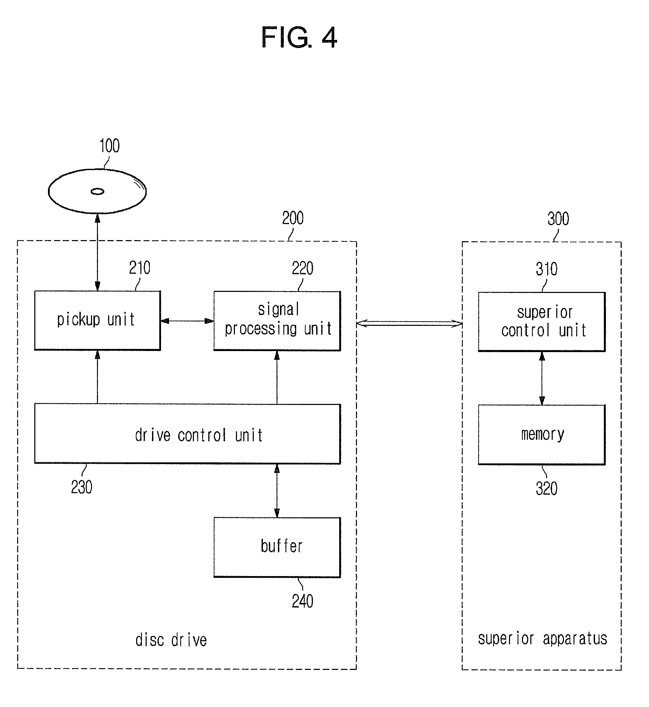

Figure 4 is a block diagram showing a configuration of an optical recording apparatus according to an embodiment of the present invention. As shown in Figure 4, the optical recording apparatus includes a disc drive 200 and a superior apparatus 300, such as a disk controller, which records information on an optical disc 100, which is a recording medium such as a DVD-RAM or a DVD-RW.

The disc drive 200 includes: a pickup unit 210 recording information/data by irradiating a laser beam on the optical disc 100 and reading the recorded information/data by receiving a reflected laser beam; a signal processing unit 220 processing information/data signals when performing recording operations such as encoding the recorded information/data and outputting the encoded information/data to the pickup unit 210, or when performing a reading operation such as decoding the output of the pickup unit 210; a drive control unit 230 controlling the recording and reading operations; and a buffer 240 storing the information/data.

The superior apparatus 300 includes a superior control unit 310 transmitting overall control commands containing the record command to the disc drive 200; and a memory 320 storing the information/data.

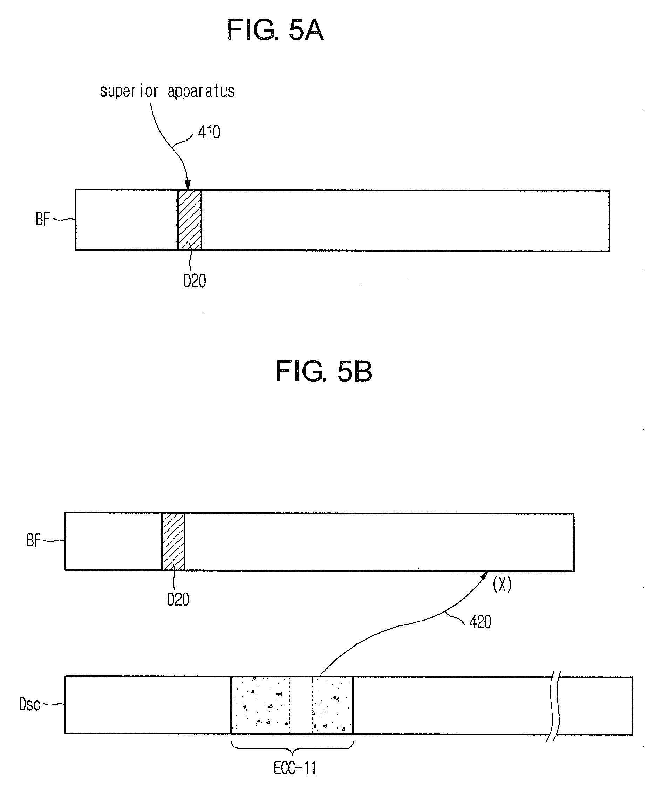

Figures 5A to 5E are views illustrating recording procedures of the apparatus shown in Figure 4. When formatting the recording data of the optical disc or adding a title to the optical disc, the superior apparatus 300 transmits the record command to the disc drive 200. As shown in Figure 5A, the buffer 240 of the disc drive 200 stores the record command (D20) received from the superior apparatus 300 (410). Accordingly, the disc drive 200 records the information/data on the optical disc 100 according to the record command.

If the record command received from the superior apparatus 300 is ECC block-unit data, the disc drive 200 immediately records the recording data on the optical disc 100. However, if the record command received through the superior apparatus 300 is not the ECC block-unit data but sector-unit data, the disc drive 200 can not immediately record the recording data on the optical disc 100. As shown in Figure 5B, the disc drive 200 which receives the sector-unit record command reads a corresponding ECC block (ECC-11) in a recording area (Dsc) of the optical disc 100. However, in a case where the optical disc 100 is scratched or is contaminated, the disc drive 200 can not perform the normal read operation, that is, the disc drive 200 can not store the ECC block (ECC-11) in a buffer area (BF) of the buffer 240 (420). Thus, the drive control unit 230 of the disc drive 200 transmits an error occurrence report with respect to the recording operation to the superior apparatus 300.

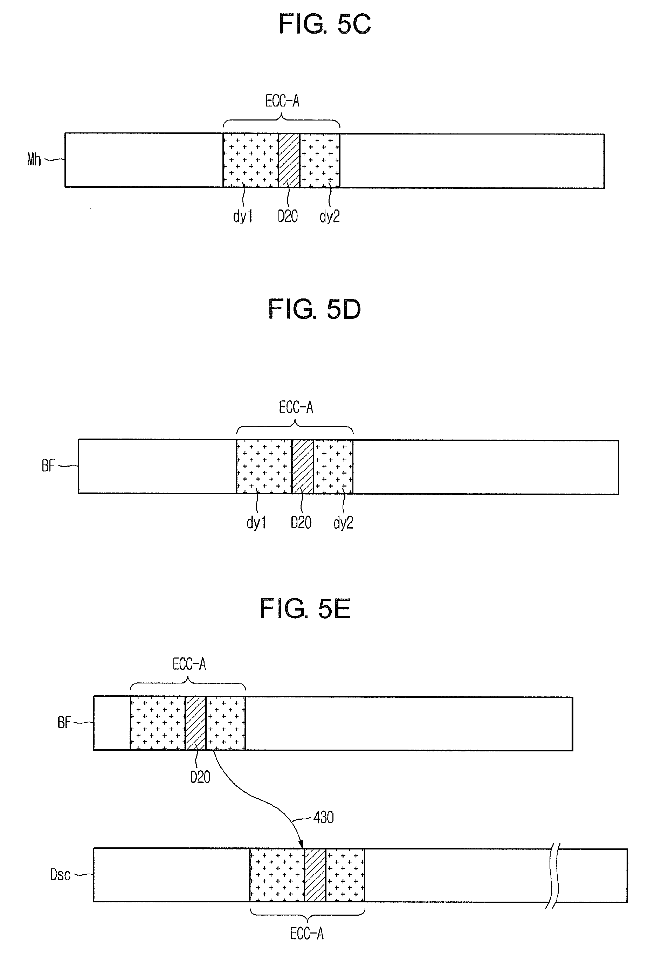

Referring to Figure 5C, the superior control unit 310 of the superior apparatus 300, which receives the error occurrence report, adds additional data (dy1, dy2) to the sector-unit record command (D20), forms new ECC block-unit data (ECC-A), and stores the new ECC block-unit data (ECC-A) in a memory area (Mh) of the memory 320. The additional data (dy1, dy2) may be determined according to a type of the record command. If the record command is a command for formatting the optical disc 100, dummy data are used as the additional data. If the record command is a command for adding a title, additional title information is used as the additional data.

The superior control unit 310 transmits the new ECC block-unit data (ECC-A) to the disc drive 200. As shown in Figure 5D, the new ECC block-unit data (ECC-A) are stored in the buffer area (BF) of the buffer 240.

Referring to Figure 5E, the drive control unit 230 of the disc drive 200 stores the new ECC block-unit data (ECC-A) in the recording area (Dsc) of the optical disc 100 through the pickup unit 210 (430).

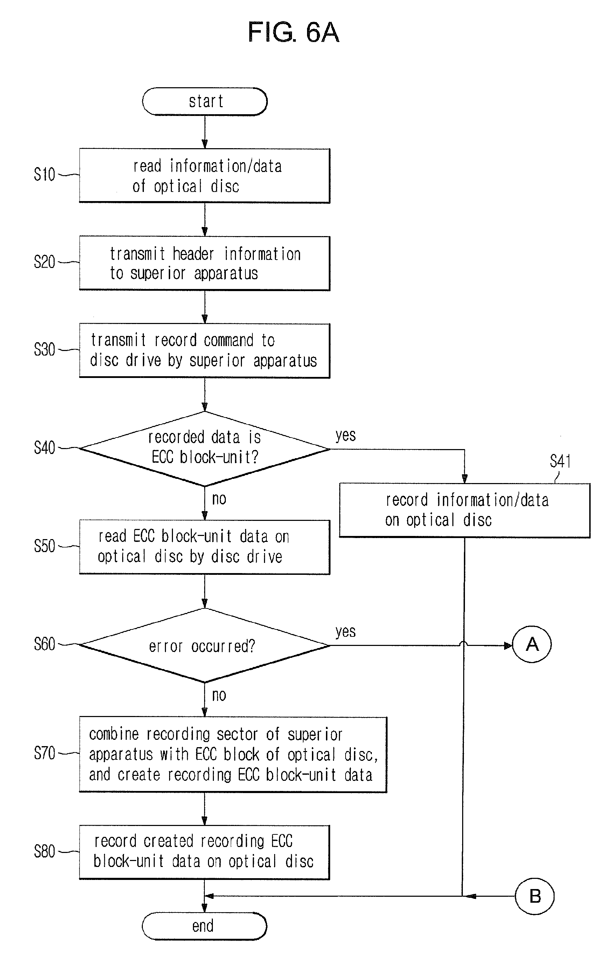

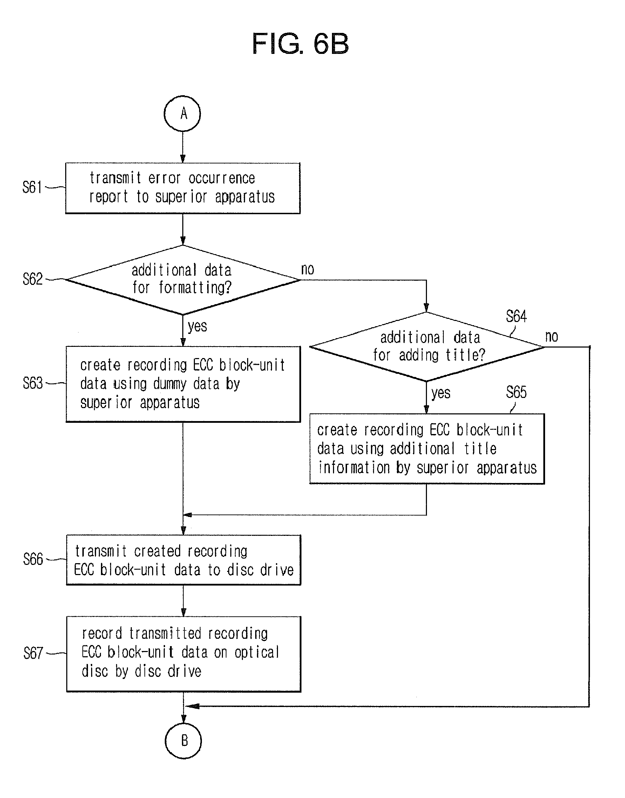

A method of recording information using the optical recording apparatus having the above-described configuration will be explained with reference to Figures 6A and 6B. Figures 6A and 6B are flowcharts illustrating an information recording method according to an embodiment of the present invention. Figure 6B is a branch of the flowchart shown in Figure 6A and Figures 6A and 6B are functionally joined at the encircled symbols "A" and "B."

Initially, when loading the optical disc 100 which is inserted on a deck in the recording apparatus, the pickup unit 210 reads basic information of the optical disc 100 (S10). The drive control unit 230 transmits header information among the read information to the superior apparatus 300 (S20). The header information is stored in the memory 320 of the superior apparatus 300.

The superior apparatus 300 transmits the record command to the disc drive 200, wherein the record command contains a start address and length information for the recording data (S30). As shown in Figure 5A, the drive control unit 230 stores the record command in the buffer area (BF) of the buffer 240.

The drive control unit 230 determines whether the transmitted record command is ECC block-unit data (S40). If the transmitted record command is ECC block-unit data, the pickup unit 210 records the ECC block-unit data on the optical disc 100 (S41).

If the transmitted record command is not the ECC block-unit data but sector-unit data, the drive control unit 230 reads corresponding ECC block-unit data on the optical disc 100 using the start address of the recording sector data through the pickup unit 210 (S50).

The drive control unit 230 determines whether an error occurs while reading the recorded data on the optical disc 100 (S60). If the error does not occur, the drive control unit 230 combines the recording sector data stored in the buffer area (BF) with the ECC block-unit data which is read from the optical disc 100, and creates the recording ECC block-unit data (S70). The drive control unit 230 records the created recording ECC block-unit data on the optical disc 100 using the pickup unit 210 (S80).

If an error occurs (S60), the drive control unit 230 transmits the error occurrence report to the superior apparatus 300 (S61) as shown in Figure 6B. Next, the superior control unit 310 of the superior apparatus 300 determines whether the record command is a command for formatting the optical disc 100 (S62). If the record command is a command for formatting the optical disc 100 according to the determination result, the superior control unit 310 adds additional data (dy1, dy2) to the recording sector data (D20), creates new recording ECC block-unit data (ECC-A), and stores the new recording ECC block-unit data (ECC-A) in the memory area (Mh) of the memory 320 as shown in Figure 5C, using dummy data as the additional data (S63).

If the record command is not a command for formatting the optical disc 100 according to the determination result (S62), the superior control unit 310 determines whether the record command is a command for adding a title to the optical disc 100 (S64). If the record command is a command for adding a title to the optical disc 100 according to the determination result, the superior control unit 310 adds additional data (dy1, dy2) to the recording sector data (D20), creates new recording ECC block-unit data (ECC-A), and stores the new recording ECC block-unit data (ECC-A) in the memory area (Mh) of the memory 320 as shown in Figure 5C. Updated additional title information is used as the additional data (S65). Next, the superior apparatus 300 transmits the created recording ECC block-unit data to the disc drive 200 (S66) and the disc drive 200 records the transmitted recording ECC block-unit data on the optical disc 100 (S67).

Thus, even when an error occurs while the disc drive reads the sector-unit data which are transmitted through the superior apparatus, the superior apparatus forms new recording ECC block-unit data according to a request of the disc drive, and transmits the new recording ECC block-unit data to the disc drive, thereby the disc drive can record the new recording ECC block-unit data on the optical disc.

As is apparent from the above description, the present invention provides an optical recording apparatus and an information recording method using the same, wherein, even when an error occurs when the disc drive records the data on the optical disc according to the record command for formatting the recorded data of the optical disc or adding a title to the optical disc, since a recording operation is stably performed, the optical recording apparatus exhibits an increased reliability.

Although a few embodiments of the present invention have been shown and described, it would be appreciated by those skilled in the art that changes may be made in this embodiment without departing from the principles of the invention, the scope of which is defined in the claims.

## Claims

1. An optical recording apparatus comprising:
a disc drive for recording digital data to an optical disc in response to a record command; and
a superior apparatus for generating record commands and transmitting the record commands to the disc drive, wherein,
if the disc drive cannot record the digital data to the optical disc in response to a first record command, the disc drive is configured to send an error occurrence report to the superior apparatus, and in response thereto the superior apparatus is configured to add additional data to the first record command to form a second record command and to send the second record command to the disc drive;
the disc drive being configured to record the digital data to the optical disc in response to the second record command.

2. The optical recording apparatus according to claim 1, wherein:
if the disc drive does not read ECC block-unit data from the optical disc according to the first record command, the disc drive is arranged to transmit the error occurrence report to the superior apparatus.

3. The optical recording apparatus according to claim 1 or 2, wherein the disc drive comprises:
a buffer for storing the first record command and the second record command; and
a drive control unit for controlling the buffer.

4. The optical recording apparatus according to claim 1, wherein the superior apparatus is configured to form the second record command into ECC block-unit data.

5. The optical recording apparatus according to claim 4, wherein the superior apparatus comprises:
a memory for storing the second record command; and
a superior control unit for controlling the memory.

6. The optical recording apparatus according to claim 4 or 5, wherein:
if the first record command is a command for formatting the optical disc, the superior apparatus is configured to use dummy data as the additional data to form the second record command.

7. The optical recording apparatus according to claim 4, 5 or 6, wherein:
if the record command is a command for adding a title on the optical disc, the superior apparatus uses additional title information as the additional data to form the second record command.

8. A method of recording digital data on an optical disc by a disc drive according to record commands received from a superior apparatus, the method comprising:
loading the optical disc in the disc drive;
transmitting a first record command to the disc drive;
determining whether the disc drive can record the digital data on the optical disc according to the first record command;
transmitting an error occurrence report to the superior apparatus if an error occurs in which the disc drive cannot record the digital data on the optical disc;
forming a second record command based on the error occurrence report, and transmitting the second record command to the disc drive; and
recording the digital data on the optical disc according to the second record command.

9. A method according to claim 8, further comprising:
transmitting the error occurrence report to the superior apparatus, if the disc drive does not read ECC block-unit data from the optical disc according to the first record command.

10. A method according to claim 8, further comprising:
forming the second record command into ECC block-unit data.

11. A method according to claim 10, further comprising:
using dummy data as the additional data to form the second record command, if the record command is a command for formatting the optical disc.

12. A method according to claim 10, further comprising:
using additional title information as the additional data to form the second record command, if the record command is a command for adding a title to the optical disc.

13. A method of handling an error occurring when recording information on an optical disc, the method comprising:
reading a first ECC block from a first area of the optical disc in response to a first record command provided by a superior apparatus;
sending an error occurrence report to the superior apparatus, if an error occurs in the reading of the first ECC block;
forming a second record command requesting the information to be recorded in a second ECC block based on the error occurrence report; and
recording the another ECC block in a second area of the optical disc according to the second record command.

14. The method of claim 13, wherein the forming of the second record command comprises:
adding dummy data to form the second ECC block, if the first record command is a command for formatting the optical disc.

15. The method of claim 13, wherein the forming of the second record command comprises:
adding additional title information to the second ECC block if the first record command is a command for adding a title on the optical disc.

16. The method of claim 13, further comprising:
modifying the first ECC block according to the first record command provided by the superior apparatus and recording the modified ECC block on the optical disc, if no error occurs during the reading of the first ECC block.

17. The method of claim 13, further comprising:
wherein the first record command includes a start address and length information of the information to be recorded.

18. The method of claim 13, further comprising:
determining whether the transmitted first record command is ECC block-unit data;
recording the ECC block-unit data on the optical disc if the first record command is the ECC block-unit data; and
reading the first ECC block based on a start address included in the first record command, if the first record command is not the ECC block-unit data.
